# FASCICULE DE BREVET EUROPEEN

(11) **EP 2 632 690 B1**
(45) Date de publication et mention de la délivrance du brevet: **13.08.2014**
(21) Numéro de dépôt: 11787737.3
(22) Date de dépôt: 26.10.2011
(51) Int. Cl.: B29C 49/54, B29C 49/06, B29C 49/48, B29C 49/70

(54) **SUPPORT DE FOND DE MOULE ET SOUS-ENSEMBLE D'UNE UNITÉ DE MOULAGE**
BODENFORMWANDSTÜTZE UND FORMEINHEIT
SUPPORT FOR A MOULD BOTTOM AND AN ASSEMBLY FOR A MOULDING UNIT

(30) Priorité: 26.10.2010 FR 1058787
(43) Date de publication de la demande: 04.09.2013
(73) Titulaire: Sidel Participations, 76930 Octeville sur Mer (FR)
(72) Inventeur: LANGLOIS, Jean-Christophe, F-76930 Octeville-Sur-Mer (FR)
(74) Mandataire: Cabinet Plasseraud
(86) Numéro de dépôt international: PCT/FR2011/052496
(87) Numéro de publication internationale: WO 2012/056168

(56) Documents cités:
- WO-A1-2007/082051
- WO-A2-02/062549
- FR-A1- 2 833 872
- US-A1- 2008 283 533

## Description

L'invention concerne un perfectionnement au support de fond de moule et en particulier un fond de moule qui est utilisé en coopération avec des demi-moules pour la confection de récipients en matériau thermoplastique, bouteilles ou autres. Elle concerne, plus précisément, le support de la partie moulante du fond de moule.

Le support du fond de moule comprend généralement deux parties qui sont solidarisées par des moyens appropriés : - un socle sur lequel est fixé ledit fond de moule et - une sellette sur laquelle ledit socle est fixé de façon amovible.

La sellette est reliée à la console, ou bâti, de l'unité porte-moule par l'intermédiaire de moyens de guidage pour permettre son mouvement vertical entre deux positions. La sellette est en effet mobile par rapport aux deux demi-moules, entre une position active qui permet de réaliser l'opération de moulage du récipient et une position inactive où elle se situe en retrait par rapport auxdits demi-moules, de façon à permettre l'évacuation du récipient moulé hors de l'unité de moulage.

Le socle du fond de moule peut se présenter, comme décrit dans le document FR 2 714 631, sous la forme d'un vérin, lequel vérin permet de déplacer ledit fond de moule pour réaliser une opération de façonnage de la bouteille selon le procédé dit "de boxage".

Le document US 2008/283533 décrit également une unité de moulage d'un récipient.

La présente invention propose, tout d'abord, un moyen permettant de relier le socle au fond de moule et, Le document WO 2007/082051 décrit un support de la partie moulante d'un fond de moule tel que défini par le préambule de la revendication 1.

La présente invention propose, tout d'abord, un moyen permettant de relier le socle au fond de moule et, en particulier, dans le cas d'un socle en forme de vérin, l'invention propose des moyens qui permettent d'assembler le fond de moule, directement ou indirectement, sur l'extrémité de la tige du vérin qui permet de manoeuvrer ledit fond de moule. L'invention propose notamment un tel moyen d'assemblage plus commode de mise en oeuvre.

Cet aménagement original du support de fond de moule et en particulier la présence de ces moyens d'assemblage dudit fond de moule sur l'extrémité du vérin, permettent également de prévoir et d'installer des moyens qui offrent la possibilité de régler, en fonction des besoins, la course du vérin de façon à contrôler cette course. En limitant cette course au strict nécessaire, on améliore de façon significative les temps de cycles et en particulier le temps du cycle lié à cette opération de boxage.

L'invention est remarquable en ce qu'elle comprend les caractéristiques de la partie caractérisante de la revendication 1.

Selon une disposition de l'invention, un verrouillage en rotation de la vis par rapport à l'extrémité de la tige s'effectue au moyen d'un pion qui est interposé entre la vis et l'extrémité de la tige.

Selon une disposition de l'invention, l'extrémité de la tige du vérin comporte des moyens de centrage et d'immobilisation de la partie mâle du système d'assemblage, lesquels moyens sont constitués - d'une bague annulaire en saillie et - d'un pion de verrouillage excentré, laquelle partie mâle comporte une rainure circulaire coopérant avec la surface intérieure de ladite bague et un orifice aménagé de façon appropriée pour coopérer avec ledit pion. Cette disposition présente l'avantage d'améliorer la commodité de mise en oeuvre de l'assemblage de la tige de vérin par rapport au fond de moule. En effet, l'écrou est facile d'accès car il entoure la vis. De plus, l'écrou étant immobilisé angulairement par rapport à la tige de vérin grâce au pion excentré, l'entrainement en rotation de l'écrou par rapport à la tige de vérin provoque le serrage ou le desserrage de la vis avec une seule main.

Selon une disposition de l'invention, le support comprend une bague d'usure qui est solidaire du corps du vérin et forme, avec la paroi de sortie de la tige du vérin, une cuvette qui fait office de logement pour accueillir le système d'assemblage lorsque ladite tige du vérin est en position rétractée. L'espace qui règne entre ladite bague d'usure et un épaulement aménagé sur la partie mâle du système d'assemblage est aménagé pour accueillir un système de cale(s) qui permet de régler la course utile de ladite tige dudit vérin, en fonction des besoins.

Toujours selon l'invention, le système de cale(s) comprend :
- une cale en forme de rondelle, aménagée pour être fixée sur la bague d'usure, en surépaisseur, et
- une cale aménagée pour être fixée sur un épaulement de la partie mâle du système d'assemblage.

Selon une autre disposition de l'invention, l'une des cales fait office de rondelle, ou tampon, d'amortissement, laquelle cale est réalisée en matériau du type polyuréthane, fixée par vis, par exemple, sur l'épaulement de la partie mâle du système d'assemblage.

Selon une variante, la vis constituant la partie mâle du système d'assemblage est façonnée directement sur la surface libre du fond de moule.

Selon une autre variante, la vis constituant la partie mâle du système d'assemblage est façonnée sur une semelle qui fait office d'interface entre ladite partie mâle et, selon le cas, le fond de moule ou une entretoise qui s'interpose entre ladite semelle et ledit fond de moule.

Toujours selon l'invention, la semelle qui fait office d'interface comporte des aménagements en forme de canaux pour réaliser la distribution d'un fluide caloporteur dans le fond de moule ainsi que, par exemple, de l'air d'aide au démoulage.

Avantageusement, l'écrou est prisonnier de l'extrémité de la tige du vérin et

Avantageusement, le support comprend un système de cale aménagé entre une bague solidaire du corps du vérin et une entretoise solidaire du fond de moule.

Selon une autre disposition préférentielle de l'invention, la partie mâle qui constitue la vis du système d'assemblage comporte une collerette qui s'étend autour de ladite vis, laquelle collerette est aménagée pour accueillir une rondelle, en matériau du genre "Nylon", qui s'interpose entre ladite collerette et l'écrou pour faire office de frein d'écrou.

Toujours selon l'invention, la rondelle est, de préférence, solidarisée sur ladite collerette de la partie mâle, c'est-à-dire sur le fond de moule, ou, selon le cas sur la semelle qui est associée audit fond de moule ou qui est associée à l'entretoise.

Selon un autre aspect, l'invention porte sur un sous-ensemble d'une unité de moulage pour réaliser le façonnage d'un récipient en matériau thermoplastique, comprenant un fond de moule incluant la partie moulante de l'unité de moulage destinée à mouler le fond du récipient, et un support précité.

Pour pouvoir être exécutée, l'invention est exposée de façon suffisamment claire et complète dans la description suivante qui, en plus, est accompagnée de dessins dans lesquels :
- la figure 1 montre un support selon l'invention, représenté sous la forme de deux demi-vues : une demi-vue schématique à droite et une demi-vue en coupe à gauche ;
- la figure 2 représente, de façon partielle et en perspective, le socle en forme de vérin, lequel vérin comporte, sur l'extrémité de sa tige, la partie femelle du système d'assemblage qui relie le fond de moule à l'extrémité de ladite tige de vérin ;
- la figure 3 représente, de façon partielle également, la partie mâle du système d'assemblage, tel qu'elle est aménagée sur le fond de moule, ou sur une semelle qui fait office d'interface, par exemple ;
- la figure 4 représente une semelle, en perspective et montre sa surface qui est aménagée pour accueillir différents types de fonds de moule dont un fond de moule qui reçoit, notamment, un fluide caloporteur.

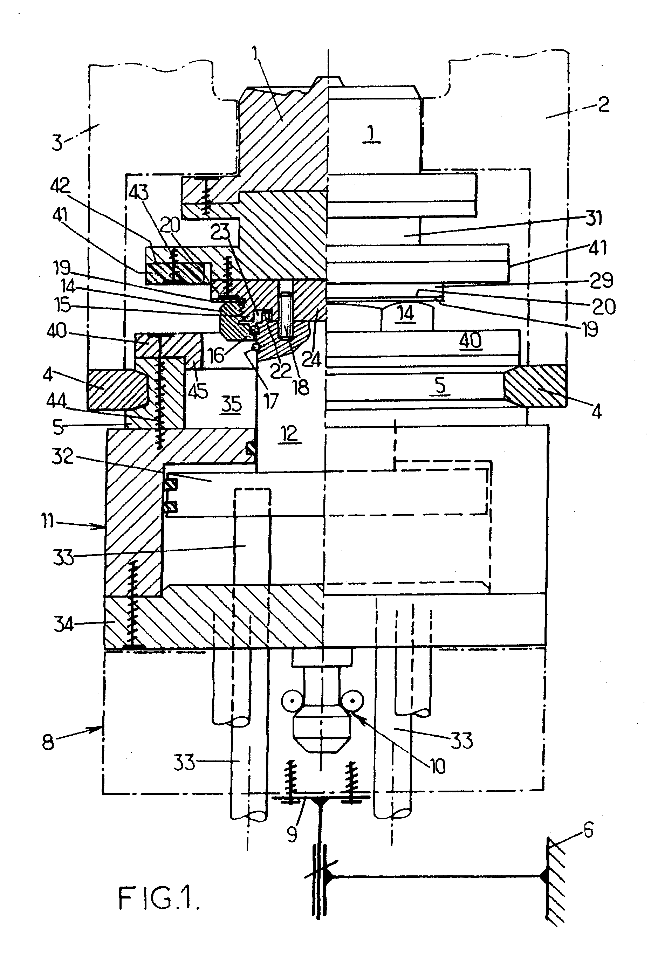

La figure 1 montre, de façon schématique et simplifiée, un support pour un fond **1** de moule, lequel fond 1 fait partie d'une unité de moulage qui comprend deux demi-moules **2** et **3,** lesquels demi-moules coopèrent, au moyen de mors **4,** avec une bague **5** qui est couramment appelée bague d'usure. Cette bague 5 permet de verrouiller le support sur les demi-moules 2 et 3 pour réaliser l'opération d'étirage-soufflage d'une préforme afin de la transformer en récipient du genre bouteille, flacon ou autres.

Cet ensemble constitué des demi-moules 2 et 3, et du support, forme ce qui est appelé l'unité de moulage. Cette unité de moulage comprend une console **6** sur laquelle sont articulés les demi-moules 2 et 3 et sur laquelle est installé le support de fond 1 de moule.

Ce support de fond 1 de moule est posé sur une sellette **8** qui est liée à la console 6, ou bâti, au moyen d'une platine **9.** Cette platine 9 est mobile verticalement entre une position active qui correspond à la fermeture du moule et qui permet l'opération de moulage et une position inactive qui correspond à l'ouverture dudit moule et qui permet l'évacuation de la bouteille, par exemple.

La sellette 8, représentée en traits mixtes fins, comporte des moyens **10** d'assemblage rapide pour accueillir un socle, lequel socle se présente sous la forme d'un vérin **11,** comme décrit dans le brevet FR précité, et la tige **12** de ce vérin 11 est liée, soit directement, soit indirectement comme c'est le cas sur la figure 1, au fond 1 de moule.

Cette liaison entre l'extrémité de la tige 12 du vérin 11 et le fond 1 de moule est réalisée au moyen d'un système **13** d'assemblage qui comprend une partie femelle constituée d'un écrou **14** et une partie mâle qui est constituée d'une vis **15** ; ce système 13 d'assemblage permet un montage et un démontage rapides et surtout commodes dudit fond 1 de moule, en fonction des besoins.

De préférence, l'écrou 14 est installé sur l'extrémité de la tige 12 du vérin 11 ; il est verrouillé sur cette tige 12 au moyen d'un jonc **16,** du genre circlip, qui se loge dans une gorge semi-circulaire aménagée vers l'extrémité de ladite tige 12, et il est immobilisé en translation au moyen d'une pièce **17,** en forme de joint annulaire élastique, qui est positionné dans une gorge semi-circulaire également, située sur ladite tige 12, sous la gorge d'accueil dudit jonc 16.

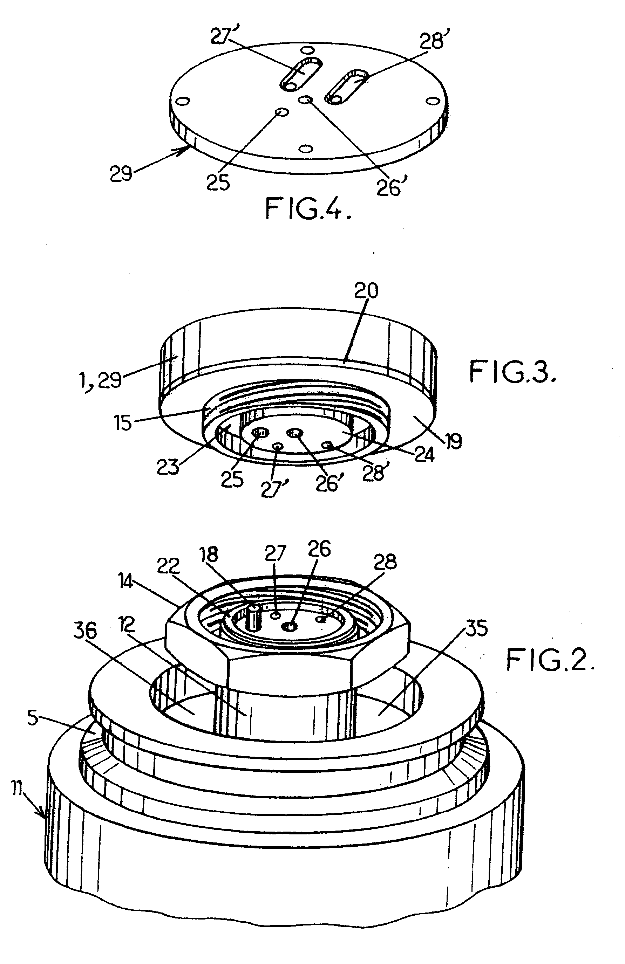

Les détails du centrage de la vis 15 par rapport à l'extrémité de la tige 12 du vérin 11 et les détails du verrouillage en rotation de cette vis apparaissent aussi figures 2 et 3. Le verrouillage en rotation de la vis 15 par rapport à l'extrémité de la tige 12 s'effectue au moyen d'un pion **18** qui est interposé entre les deux.

L'immobilisation de l'écrou 14 par rapport à la partie mâle qui comporte la vis 15 est réalisée au moyen d'une rondelle **19** du type rondelle frein en matériau approprié du genre « Nylon ». Cette rondelle 19 s'interpose entre l'écrou 14 et une collerette **20** réalisée sur la partie mâle qui comporte la vis 15, autour de cette vis 15. Cette rondelle 19 est suffisamment souple pour ne pas interférer avec le serrage direct de la vis 15 sur l'extrémité de la tige 12 du vérin 11.

Comme représenté figures 2 et 3, en perspective, d'une façon plus détaillée, l'écrou 14 est installé à l'extrémité de la tige 12 du vérin 11 et cette extrémité comporte une bague **22** annulaire pour réaliser le centrage de la partie mâle qui comporte la vis 15, laquelle partie mâle comprend une rainure **23** circulaire et le moignon **24** central de cette partie mâle se loge dans ladite bague 22. Le centrage de la partie mâle sur l'extrémité de la tige 12 du vérin s'effectue sur la surface interne de la bague 22.

L'indexage de la partie mâle comportant la vis 15 et en particulier l'indexage du fond 1 de moule par rapport à l'extrémité de la tige 12 du vérin 11, est réalisé au moyen du pion 18, lequel pion 18 est installé sur l'extrémité de ladite tige 12 et il coopère avec un alésage **25** réalisé dans le moignon 24 de ladite partie mâle.

Sur ces figures 2 et 3, on remarque un orifice central situé sur l'extrémité de la tige 12 du vérin 11. Cet orifice **26** central permet, par exemple, l'amenée d'air comprimé pour l'aide au démoulage du récipient, c'est-à-dire le décollage du fond dudit récipient par rapport au fond 1 de moule. Deux autres orifices **27** et **28** permettent, par exemple, l'arrivée et le retour d'un fluide caloporteur dont le rôle est de maintenir le fond 1 de moule à une température appropriée pour réaliser l'opération de moulage et/ou selon le cas l'opération de boxage.

Ces orifices se retrouvent sur la partie mâle constituant la vis 15, laquelle partie mâle peut aussi être constituée, comme délimitée figure 3 en traits mixtes fins et comme représentée figure 4, d'une semelle **29** faisant office d'interface entre la tige 12 du vérin et le fond 1 de moule. Cette semelle 29 comporte des aménagements 27' et 28' en forme de canaux qui permettent de distribuer le fluide caloporteur dans des canaux aménagés sur le fond 1 de moule et elle comporte aussi un aménagement 26' pour réaliser l'introduction de l'air comprimé, toujours vers un ou plusieurs canaux de ce fond 1 de moule.

Cette semelle 29 peut être directement associée au fond 1 de moule ou, comme représenté figure 1, recevoir une pièce qui fait office d'entretoise, laquelle entretoise **31** est interposée entre ladite semelle 29 et le fond 1 de moule.

La rondelle 19 qui permet de freiner l'écrou 14 s'interpose entre ledit écrou 14 et la collerette 20 de la partie mâle, laquelle collerette 20 fait partie soit du fond 1 de moule, soit de la semelle 29, laquelle semelle 29 pouvant être associée audit fond 1 de moule ou à son entretoise 31, selon le cas.

Le serrage de l'écrou 14 est possible grâce à l'immobilisation de la vis 15, laquelle vis 15 est maintenue fixe par une chaîne d'éléments qui se termine sur la console 6, c'est-à-dire sur le bâti de l'unité porte-moule. Cette chaîne d'éléments qui va de la vis 15 à la console 6 comprend, dans l'ordre, le pion 18, la tige 12 du vérin 21, le piston **32** dudit vérin 21 et des conduits **33** qui sont solidaires dudit piston 32 et qui coulissent dans le couvercle **34** dudit vérin 11. Cette conception originale du support est décrite dans la demande PCT/FR2010/050909.

Le système 13 d'assemblage, c'est-à-dire l'écrou 14 et la vis 15, se loge dans une cuvette **35** délimitée par la bague 5 d'usure et par la paroi **36** du vérin 11 qui est traversée par la tige 12, laquelle cuvette 35 permet de loger ledit système d'assemblage lors des mouvements du fond 1 de moule.

La course de la tige 12 du vérin 11 peut avantageusement être réglée au moyen d'un système de cales comme celles qui apparaissent figure 1.

Ainsi, une cale **40** en forme de rondelle est positionnée en surépaisseur sur la bague 5 d'usure, sur sa surface supérieure libre, et une autre cale **41** est installée sur un épaulement **42** qui peut être aménagé directement sur le fond 1 de moule ou, comme représenté sur la figure 1, au niveau de l'entretoise 31 qui est interposée entre la semelle 29 et ledit fond 1 de moule.

Ce système de cales 40, 41, permet de moduler, selon l'épaisseur des cales 40 et 41, la course de la tige 12 du vérin 11 et, en particulier, de moduler le déplacement du fond 1 de moule de façon à contrôler la course de ce fond 1. En contrôlant la course de la tige 12 du vérin 11, on optimise le temps nécessaire à la réalisation de l'opération de boxage et on optimise le cycle de boxage et le cycle de fabrication de la bouteille.

Ainsi, à titre d'exemple, on peut avoir une course maximale de 20 mm pour le fond 1 de moule, sans utiliser de cales, et avoir une course choisie, réglée selon les besoins, et à volonté, par un choix approprié au niveau de l'épaisseur des cales 40 et 41 qui sont utilisées.

La cale 41 se présente, par exemple, sous la forme de segment, ou carrément d'une rondelle ; elle peut être réalisée en matériau thermoplastique pour faire office de tampon amortisseur afin d'encaisser les chocs lors du mouvement de la tige 12 du vérin et en particulier les chocs lors de la rétraction de ladite tige 12. Cette cale 41 est, par exemple, fixée par vis **43** sur l'épaulement 42 de l'entretoise 31 qui constitue l'un des éléments de la partie mâle du système d'assemblage.

La cale 40 est fixée par vis **44** sur la bague 5 ou directement sur le vérin 11 et elle est centrée sur ladite bague 5 par une collerette **45** interne.

## Revendications

1. Support de la partie moulante d'un fond de moule coopérant avec des demi-moules d'une unité de moulage pour réaliser le façonnage d'un récipient en matériau thermoplastique, lequel support comprend :
- un vérin (11) incluant une tige (12) solidaire dudit fond (1) de moule et un corps verrouillable sur les demi-moules (2, 3) de ladite unité de moulage,
- une sellette (8) interposée entre ledit vérin (11) et une console (6) de ladite unité de moulage, et,
- un système (13) d'assemblage entre ladite tige (12) du vérin (11) et ledit fond (1) de moule,
le système (13) d'assemblage étant constitué d'une partie femelle, en forme d'écrou (14), et d'une partie mâle, en forme de vis (15).
**caractérisé en ce que** la vis (15) est associée directement, ou indirectement, au fond (1) de moule, et **en ce que** l'extrémité de la tige (12) du vérin (11) comporte des moyens de centrage et d'immobilisation de la partie mâle du système (13) d'assemblage, lesquels moyens comprennent une bague (22) annulaire en saillie et un pion (18) de verrouillage excentré, et **en ce que** la partie mâle comporte une rainure (23) circulaire coopérant avec la surface intérieure de ladite bague (22) et un orifice (25) aménagé de façon appropriée pour coopérer avec ledit pion (18).

2. Support de la partie moulante d'un fond de moule selon la revendication 1, **caractérisé en ce qu'**un verrouillage en rotation de la vis (15) par rapport à l'extrémité de la tige (12) s'effectue au moyen d'un pion (18) qui est interposé entre la vis et l'extrémité de la tige.

3. Support de la partie moulante d'un fond de moule selon la revendication 1 ou 2, **caractérisé en ce qu'**il comprend une bague (5) d'usure qui est solidaire du corps du vérin (11), laquelle bague (5) d'usure forme, avec la paroi (36) de sortie de la tige (12) dudit vérin, une cuvette (35) qui fait office de logement pour accueillir le système (13) d'assemblage lorsque ladite tige (12) dudit vérin (11) est en position rétractée, et **en ce qu'**il comprend un système de cale(s) (40, 41) qui permet de régler la course utile de ladite tige (12) dudit vérin (11) en fonction des besoins, lequel système de cale(s) est accueilli dans un espace qui règne entre ladite bague (5) d'usure et un épaulement (42) aménagé sur la partie mâle dudit système (13) d'assemblage.

4. Support de la partie moulante d'un fond de moule selon la revendication 3, **caractérisé en ce que** le système de cale(s) comprend - une cale (40) en forme de rondelle, aménagée pour être fixée en surépaisseur sur la partie libre de la bague (5) d'usure, et une cale (41) aménagée pour être fixée sur un épaulement (42) de la partie mâle du système (13) d'assemblage.

5. Support de la partie moulante d'un fond de moule selon la revendication 4, **caractérisé en ce que** la cale (41) fait office de rondelle, ou tampon, d'amortissement, laquelle cale (41) est réalisée en matériau du type polyuréthane, fixée par vis (43) sur l'épaulement (42) de la partie mâle du système d'assemblage.

6. Support de la partie moulante d'un fond de moule selon l'une des revendications 1 à 5, **caractérisé en ce que** la vis (15) constituant la partie mâle du système (13) d'assemblage est façonnée directement sur la surface libre du fond (1) de moule.

7. Support de la partie moulante d'un fond de moule selon l'une des revendications 1 à 5, **caractérisé en ce que** la vis (15) constituant la partie mâle du système (13) d'assemblage est façonnée sur une semelle (29) qui fait office d'interface entre ladite partie mâle et, selon le cas, le fond (1) de moule ou une entretoise (31) qui s'interpose entre ladite semelle (29) et ledit fond (1) de moule.

8. Support de la partie moulante d'un fond de moule selon la revendication 7, **caractérisé en ce que** la semelle (29), qui fait office d'interface, comporte des aménagements (27' et 28') en forme de canaux pour réaliser la distribution d'un fluide caloporteur dans le fond (1) de moule ainsi que, par exemple, un aménagement (26') pour amener l'air d'aide au démoulage.

9. Support de la partie moulante d'un fond de moule selon l'une des revendications 1 à 8, **caractérisé en ce que** l'écrou (14) est prisonnier de l'extrémité de la tige (12) du vérin (11).

10. Support de la partie moulante d'un fond de moule selon la revendication 1 ou 2, **caractérisé en ce qu'**il comprend un système de cale (40, 41) aménagé entre une bague (5) solidaire du corps du vérin (11) et une entretoise (31) solidaire du fond (1) de moule.

11. Support de la partie moulante d'un fond de moule selon l'une des revendications 1 à 10, **caractérisé en ce que** la partie mâle qui constitue la vis (15) comporte une collerette (20) qui s'étend autour de ladite vis (15), laquelle collerette (20) est aménagée pour accueillir une rondelle (19), en matériau du genre "Nylon", qui s'interpose entre ladite collerette (20) et l'écrou (14), pour faire office de frein d'écrou.

12. Support de la partie moulante d'un fond de moule selon la revendication 11, **caractérisé en ce que** la rondelle (19) est solidarisée sur ladite collerette (20) de la partie mâle, c'est-à-dire sur le fond (1) de moule, ou, selon le cas sur la semelle (29) qui est associée audit fond (1) de moule ou à l'entretoise (31).

13. Sous-ensemble d'une unité de moulage pour réaliser le façonnage d'un récipient en matériau thermoplastique, **caractérisé en ce qu'**il comprend :
- un fond (1) de moule incluant la partie moulante de l'unité de moulage destinée à mouler le fond du récipient, et
- un support selon l'une des revendications précédentes.

## Patentansprüche

1. Stütze des formenden Teils eines Formbodens, der mit den Formhälften einer Formeinheit zum Formen eines Behälters aus thermoplastischem Material kooperiert, wobei die Stütze:
- einen Zylinder (11) mit einer fest mit dem Formboden (1) verbundenen Stange (12) und einem an den Formhälften (2, 3) der Formeinheit verriegelbaren Korpus,
- einen zwischen dem Zylinder (11) und einer Konsole (6) der Formeinheit angeordneten Sattel (8) und
- ein Verbindungssystem (13) zwischen der Stange (12) des Zylinders (11) und dem Formboden (1) umfasst,
wobei das Verbindungssystem (13) aus einem weiblichen Teil in Form einer Mutter (14) und einem männlichen Teil in Form einer Schraube (15) besteht,
**dadurch gekennzeichnet, dass** die Schraube (15) direkt oder indirekt mit dem Formboden (1) verbunden ist, und dadurch, dass das Ende der Stange (12) des Zylinders (11) Mittel zur Zentrierung und Arretierung des männlichen Teils des Verbindungssystems (13) umfasst, wobei die Mittel einen vorspringenden kreisförmigen Ring (22) und einen exzentrischen Riegelbolzen (18) umfassen, und dadurch, dass der männliche Teil eine mit der Innenfläche des Rings (22) kooperierende kreisförmige Nut (23) und eine Öffnung (25) umfasst, die in geeigneter Weise angeordnet ist, um mit dem Bolzen (18) zu kooperieren.

2. Stütze des formenden Teils eines Formbodens nach Anspruch 1, **dadurch gekennzeichnet, dass** eine Drehverriegelung der Schraube (15) im Verhältnis zum Ende der Stange (12) mittels eines Bolzens (18) erfolgt, der zwischen der Schraube und dem Ende der Stange angeordnet ist.

3. Stütze des formenden Teils eines Formbodens nach Anspruch 1 oder 2, **dadurch gekennzeichnet, dass** sie einen Verschleißring (5) umfasst, der fest mit dem Korpus des Zylinders (11) verbunden ist, wobei der Verschleißring (5) mit der Ausgangswand (36) der Stange des Zylinders eine Wanne (35) bildet, die als Aufnahme dient, um das Verbindungssystem (13) aufzunehmen, wenn sich die Stange (12) des Zylinders (11) in zurückgezogener Position befindet, und dadurch, dass sie ein Zwischenlagensystem (40, 41) umfasst, das es ermöglicht, den Nutzhub der Stange (12) des Zylinders (11) je nach Bedarf zu regeln, wobei das Zwischenlagensystem in einem Raum aufgenommen ist, der zwischen dem Verschleißring (5) und einer am männlichen Teil des Verbindungssystems (13) angeordneten Schulter (42) liegt.

4. Stütze des formenden Teils eines Formbodens nach Anspruch 3, **dadurch gekennzeichnet, dass** das Zwischenlagensystem eine Zwischenlage (40) in Form einer Scheibe umfasst, die angeordnet ist, um als Verstärkung am freien Teil des Verschleißrings (5) befestigt zu werden, und eine Zwischenlage (41), die angeordnet ist, um an einer Schulter (42) des männlichen Teils des Verbindungssystems (13) befestigt zu werden.

5. Stütze des formenden Teils eines Formbodens nach Anspruch 4, **dadurch gekennzeichnet, dass** die Zwischenlage (41) als Dämpfungsscheibe oder -puffer dient, wobei die Zwischenlage (41) aus einem Polyurethan-Material besteht und durch eine Schraube (43) an der Schulter (42) des männlichen Teils des Verbindungssystems befestigt ist.

6. Stütze des formenden Teils eines Formbodens nach einem der Ansprüche 1 bis 5, **dadurch gekennzeichnet, dass** die den männlichen Teil des Verbindungssystems (13) bildende Schraube (15) direkt an die freie Oberfläche des Formbodens (1) angeformt ist.

7. Stütze des formenden Teils eines Formbodens nach einem der Ansprüche 1 bis 5, **dadurch gekennzeichnet, dass** die den männlichen Teil des Verbindungssystems (13) bildende Schraube (15) an eine Sohle (29) angeformt ist, die als Schnittstelle zwischen dem männlichen Teil und dem Formboden (1) bzw. einem Distanzring (31) dient, der zwischen der Sohle (29) und dem Formboden (1) angeordnet ist.

8. Stütze des formenden Teils eines Formbodens nach Anspruch 7, **dadurch gekennzeichnet, dass** die Sohle (29), die als Schnittstelle dient, Anordnungen (27' und 28') in Form von Kanälen umfasst, um die Verteilung eines Wärmeträgers im Formboden (1) zu realisieren, sowie zum Beispiel eine Anordnung (26') zur Luftzufuhr, um die Entformung zu unterstützen.

9. Stütze des formenden Teils eines Formbodens nach einem der Ansprüche 1 bis 8, **dadurch gekennzeichnet, dass** die Mutter (14) fest in das Ende der Stange (12) des Zylinders (11) eingefügt ist.

10. Stütze des formenden Teils eines Formbodens nach Anspruch 1 oder 2, **dadurch gekennzeichnet, dass** sie ein Zwischenlagensystem (40, 41) umfasst, das zwischen einem fest mit dem Korpus des Zylinders (11) verbundenen Ring (5) und einem fest mit dem Formboden (1) verbundenen Distanzring (31) angeordnet ist.

11. Stütze des formenden Teils eines Formbodens nach einem der Ansprüche 1 bis 10, **dadurch gekennzeichnet, dass** der männliche Teil, der die Schraube (15) bildet, einen Kragen (20) umfasst, der sich um die Schraube (15) erstreckt, wobei der Kragen (20) angeordnet ist, um eine Scheibe (19) aus einem Nylon-Material aufzunehmen, die zwischen dem Kragen (20) und der Mutter (14) angeordnet ist, um als Schraubensicherung zu dienen.

12. Stütze des formenden Teils eines Formbodens nach Anspruch 11, **dadurch gekennzeichnet, dass** die Scheibe (19) fest am Kragen (20) des männlichen Teils, das heißt, am Formboden (1) bzw. an der Sohle (29) angebracht ist, die mit dem Formboden (1) oder dem Distanzring (31) verbunden ist.

13. Unterbaugruppe einer Formeinheit zum Formen eines Behälters aus thermoplastischem Material, **dadurch gekennzeichnet, dass** sie
- einen Formboden (1) mit dem formenden Teil einer Formeinheit zum Formen des Bodens des Behälters und
- eine Stütze nach einem der vorhergehenden Ansprüche umfasst.

## Claims

1. Support for the moulding portion of a mould base cooperating with half-moulds of a moulding unit to shape a container of thermoplastic material, said support comprising:
- an actuating cylinder (11) including a rod (12) solidly connected to said mould base (1) and a body that can be locked onto the half-moulds (2, 3) of said moulding unit,
- a carriage (8) placed between said actuating cylinder (11) and a bracket (6) of said moulding unit, and,
- an assembly system (13) between said rod (12) of the actuating cylinder (11) and said mould base (1), the assembly system (13) consisting of a female part in the form of a nut (14), and a male part in the form of a screw (15),
**characterized in that** the screw (15) is associated directly or indirectly with the mould base (1), and **in that** the end of the rod (12) of the actuating cylinder (11) comprises means for centering and immobilizing the male part of the assembly system (13), said means comprising a protruding annular ring (22) and an off-centered locking pin (18), and **in that** the male part comprises a circular groove (23) cooperating with the inside surface of said ring (22) and an opening (25) arranged in a manner appropriate for cooperating with said pin (18).

2. Support for the moulding portion of a mould base according to claim 1, **characterized in that** the screw (15) is rotationally locked relative to the end of the rod (12) by means of a pin (18) which is placed between the screw and the end of the rod.

3. Support for the moulding portion of a mould base according to claim 1 or 2, **characterized in that** it comprises a wear ring (5) which is solidly connected to the body of the actuating cylinder (11), said wear ring (5) forming, with the exit wall (36) of the rod (12) of said actuating cylinder, a recess (35) which serves to house the assembly system (13) when said rod (12) of said actuating cylinder (11) is in the retracted position, and **in that** it comprises a system of shim(s) (40, 41) which allows adjusting the working stroke of said rod (12) of said actuating cylinder (11) according to requirements, said system of shim(s) being accommodated in a space which extends between said wear ring (5) and a shoulder (42) arranged on the male part of said assembly system (13).

4. Support for the moulding portion of a mould base according to claim 3, **characterized in that** the system of shim(s) comprises: - a shim (40) in washer form, arranged for attachment to the free portion of the wear ring (5) so as to add additional thickness, and a shim (41) arranged for attachment to a shoulder (42) of the male part of the assembly system (13).

5. Support for the moulding portion of a mould base according to claim 4, **characterized in that** the shim (41) acts as a damping washer or pad, said shim (41) being made of polyurethane-type material and being attached by screw (43) to the shoulder (42) of the male part of the assembly system.

6. Support for the moulding portion of a mould base according to any of claims 1 to 5, **characterized in that** the screw (15) constituting the male part of the assembly system (13) is formed directly on the free surface of the mould base (1).

7. Support for the moulding portion of a mould base according to any of claims 1 to 5, **characterized in that** the screw (15) constituting the male part of the assembly system (13) is formed on a sole plate (29) which acts as an interface between said male part and, depending on the case, the mould base (1) or a spacer (31) which is placed between said sole plate (29) and said mould base (1).

8. Support for the moulding portion of a mould base according to claim 7, **characterized in that** the sole plate (29), which acts as an interface, comprises arrangements (27' and 28') in the form of channels, for distributing a heat transfer fluid into the mould base (1) as well as, for example, an arrangement (26') for supplying the air to assist with unmoulding.

9. Support for the moulding portion of a mould base according to any of claims 1 to 8, **characterized in that** the nut (14) is a captive nut at the end of the rod (12) of the actuating cylinder (11).

10. Support for the moulding portion of a mould base according to claims 1 or 2, **characterized in that** it comprises a shim system (40, 41) arranged between a ring (5) solidly connected to the body of the actuating cylinder (11) and a spacer (31) solidly connected to the mould base (1).

11. Support for the moulding portion of a mould base according to any of claims 1 to 10, **characterized in that** the male part which constitutes the screw (15) comprises a collar (20) which extends around said screw (15), said collar (20) being arranged to accept a washer (19), of a "Nylon"-type material, which is placed between said collar (20) and the nut (14) in order to act as a locking washer.

12. Support for the moulding portion of a mould base according to claim 11, **characterized in that** the washer (19) is solidly connected to said collar (20) of the male part, meaning to the mould base (1), or, depending on the case, to the sole plate (29) which is associated with said mould base (1) or with the spacer (31).

13. Sub-assembly of a moulding unit for forming a container of thermoplastic material, **characterized by** its comprising:
- a mould base (1) including the moulding portion of the moulding unit intended for moulding the base of the container, and
- a support according to any one of the above claims.
